(19) Europäisches Patentamt
European Patent Office
Office européen des brevets

(11) **EP 3 134 367 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(21) Anmeldenummer: **15719625.4**

(22) Anmeldetag: **09.04.2015**

(51) Int Cl.:
*C03C 17/00* (2006.01)     *B32B 17/06* (2006.01)
*B65H 18/28* (2006.01)     *C03C 17/28* (2006.01)
*C03C 17/32* (2006.01)

(86) Internationale Anmeldenummer:
**PCT/EP2015/057665**

(87) Internationale Veröffentlichungsnummer:
**WO 2015/162012 (29.10.2015 Gazette 2015/43)**

(54) **DÜNNGLASVERBUND UND VERFAHREN ZUR LAGERUNG VON DÜNNGLAS**

THIN SHEET GLASS COMPOSITE AND METHOD OF STORING THIN SHEET GLASS

COMPOSITE DE VERRE MINCE ET PROCÉDÉ DE STOCKAGE DE VERRE MINCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2014 DE 102014207837**

(43) Veröffentlichungstag der Anmeldung:
**01.03.2017 Patentblatt 2017/09**

(73) Patentinhaber: **tesa SE**
**22848 Norderstedt (DE)**

(72) Erfinder:
• **KEITE-TELGENBÜSCHER, Klaus**
**22529 Hamburg (DE)**
• **CZESKI, Tanita**
**22851 Norderstedt (DE)**
• **SCHUH, Christian**
**22767 Hamburg (DE)**

(56) Entgegenhaltungen:
EP-A1- 0 716 339     US-A- 6 103 141
US-A1- 2006 088 663     US-A1- 2010 192 634
US-A1- 2011 177 325     US-A1- 2013 068 279

**Beschreibung**

Die Erfindung betrifft ein Verfahren zur Lagerung von Dünnglas sowie einen aufgerollten Dünnglasverbund.

Optoelektronische Anordnungen werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen davon. Die entsprechenden Produkte sind je nach gewünschter Anwendung starr oder flexibel ausgebildet, wobei eine zunehmende Nachfrage nach flexiblen Anordnungen besteht. Die Herstellung derartiger Anordnungen erfolgt häufig durch Druckverfahren wie Hochdruck, Tiefdruck, Siebdruck, Flachdruck oder auch durch sogenanntes "non impact printing" wie etwa Thermotransferdruck, Tintenstrahldruck oder Digitaldruck. Vielfach werden aber auch Vakuumverfahren wie beispielsweise Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung verwendet. Die Strukturierung erfolgt in der Regel durch Masken.

Als Beispiele für bereits kommerziell erhältliche oder in ihrem Marktpotential interessante optoelektronische Anwendungen seien hier elektrophoretische oder elektrochrome Aufbauten oder Displays, organische oder polymere Leuchtdioden (OLEDs oder PLEDs) in Anzeige- oder Displayvorrichtungen oder als Beleuchtung genannt, ferner können die Dünnglasfolien zur Abdeckung oder Umkapselung von Elektrolumineszenzlampen, lichtemittierenden elektrochemischen Zellen (LEECs), organischen Solarzellen wie Farbstoff- oder Polymersolarzellen, anorganischen Dünnschichtsolarzellen, zum Beispiel auf Basis von Silizium, Germanium-Kupfer, Indium oder Selen, oder Perowskitsolarzellen oder organischen Feldeffekttransistoren, organischen Schaltelementen, organischen optischen Verstärkern, organischen Laserdioden, organischen oder anorganischen Sensoren oder organisch oder anorganisch basierten RFID-Transpondern dienen.

Die Dünnglasfolien werden auf Rollen gerollt zur Verfügung gestellt. Aufgrund der Gefahr von Spannungsrisskorrosion sowie zur mechanischen Stabilisierung muss die Dünnglasfolie mit einer Schutzfolie geschützt und stabilisiert werden.

Wesentlich für den breiten Einsatz von Dünnglas auf einer Rolle sind stabilitätserhaltende Maßnahmen zur Vermeidung von Glaskorrosion. Bei der Glaskorrosion handelt es sich um ein Phänomen, das bewirkt, dass sich Risse in Silikatgläsern, die unter Spannung stehen, vergrößern. Die unter Zug- oder Eigenspannung stehende Korrosion wird auch als statische Ermüdung oder Spannungsrisskorrosion bezeichnet. Sie resultiert aus dem langsamen Wachstum der bereits vorhandenen Mikrorisse im Material.

Chemisch ist für die Spannungsrisskorrosion die Wechselwirkung zwischen den gespannten Molekülen in der Rissspitze des Glases und den Wassermolekülen aus der Umgebungsluft verantwortlich.

Aus Siliziumoxiden bestehende Quarzgläser sind hochgradig homogen. Die Silikate sind in tetraedischen Einheiten zusammengesetzt und an ihren Ecken durch Siliziumoxidbindungen verbunden. Im atomaren Maßstab tragen die Siliziumoxidbindungen die Spannungen im Material, und der Bruch der Siliziumoxidbindungen ist ausschlaggebend und verantwortlich für den Rissfortgang im Material, die sogenannte Spannungsrisskorrosion. In der Rissspitze des Risses im Quarzglas werden hochkonzentrierte Dehnungsfelder erzeugt. Näherungswerte zeigen, dass die Brückenbindungen, also der Abstand der Silizium- und Sauerstoffatome der Siliziumoxidbindung eine Dehnung von mehr als 20 % erfährt. Die Wirkung dieser Dehnung an der verbrückenden Siliziumoxidbindung kann als verringerte Bindungsüberlappung angesehen werden. Die Silizium- und Sauerstoffatome der gedehnten Bindung bergen somit eine erhöhte Verfügbarkeit zur Bindung mit anderen Atomen. Insbesondere führt dieses zu einer Interaktion der gespannten Brückenbindung an der Rissspitze und einem Wassermolekül aus der Umgebung. Die Theorie der Spannungsrisskorrosion ist auch im Aufsatz "Stress-corrosion mechanism in silicate glasses" (Matteo Ciccotti, Journal of Physics D: applied Physics Vol. 42, 2009) dargestellt.

In einem ersten Schritt lagert sich ein Wassermolekül aus der Umgebung an eine gespannte verbrückende Si-O-Si-Bindung in der Rissspitze an. Das Wassermolekül lagert sich zuerst durch die Bildung einer Wasserstoffbrücke zwischen dem H (des Wasser) und dem O (Sauerstoff aus der Si-O-Si-Bindung) und dann durch Wechselwirkung der freien Elektronenpaare des O (des Wassers) mit dem Silizium an das Siliziumatom an. Die Orbitalwechselwirkung des freien Elektronenpaars kann sich entweder auf Van-der Waals-Anziehung oder eine kovalente Bindung mit unbesetzten Si-Orbitalen beziehen.

In einem zweiten Schritt tritt eine konzertierte Reaktion auf. Bei dieser Reaktion tritt ein Protonentransfer an das SO (Si-O) gleichzeitig mit einem Elektronentransfer von dem O (des Wassers) an das Silizium auf. Als Ergebnis dieser Reaktion werden zwei neue Bindungen gebildet, und zwar eine zwischen dem O (des Wassers) und dem Silizium und eine zwischen dem H (des Wassers) und dem O (des Si-O).

In einem dritten Schritt bricht die Bindung zwischen dem O (des Wassers) und dem übertragenen H (des Wassers), und es bilden sich Si-OH Gruppen an der Oberfläche. Da die Wasserstoffbindung relativ schwach ist, wird dieser Schritt unmittelbar nach dem Protonentransfer erwartet. Dabei handelt es sich um eine fortlaufende Reaktion im Glas, die zwischen dem Glas, das unter Spannung liegt, und dem Umgebungswasser abläuft. Der Mechanismus tritt auch in nicht reinen Silikatgläsern in gleicher oder ähnlicher Form auf.

Gerade die auf Rollen aufgerollten Dünnglasfolien stehen unter Spannung, die eine fortlaufende Rissbildung unterstützt. Aus dem Stand der Technik sind verschiedene Verfahren und Vorrichtungen bekannt, die eine Stabilisierung von Dünnglas ermöglichen.

In der WO 2011/084323 A1 wird ein Polymerglaslaminat zur Stabilisierung von Dünnglas und zur Versiegelung von Mikrorissen beschrieben. Dabei werden mikroskopische Strukturdefekte versiegelt. Ein alkoxysilanmodifiziertes Polyolefin versiegelt bei Kontakt mit dem Glas die Mikrorisse. Dabei wird der Mikroriss verfüllt und die Permeationsrate an der gesiegelten Stelle beträgt mindestens 90 % der Permeationsrate des unbeschädigten Materials. Es entsteht eine nicht reversible Verbindung des modifizierten Polyolefins zum Glas. Die alkoxysilanmodifizierte Polyolefinschicht kann auch aus einer Lösung aufgetragen oder aus einer Schmelze extrusionsbeschichtet werden, vorzugsweise wird hier aber die Lamination einer vorgefertigten Schicht auf das Glas offenbart. Nachteilig ist die hohe Beanspruchung des Dünnglases bei der Lamination durch Druck und Temperatur, wodurch die Gefahr von Glasbrüchen erhöht ist. Die modifizierte Polyolefinschicht weist kein Trocknungsmittel auf.

In der US 6,815,070 B1 ist ein Glas-Kunststoffverbund beschrieben für die Stabilisierung von Dünnglas. Die Beschichtung des Dünnglases geschieht durch Coating mit flüssigen Polymeren. Das Aufbringen der Polymerschicht geschieht durch Schleudern, Sprühen, Aufgießen, Aufwalzen oder Tauchen. Als Verwendung wird die Verkapselung von OLEDs angegeben. Eine über die mechanische Stabilisierung hinausgehende Funktionalität der Polymerschicht ist nicht offenbart.

Aus der WO 2005/110741 A1 sind verschiedene Prozesse zur Herstellung von Glas-Polymerlaminaten beschrieben. Polymere werden in Form von Folien, Schmelzen, Lösungen und Zusammensetzungen verwendet. Aufgebracht werden die Polymere durch Kaschieren, Aufsprühen, Gießen, Tauchen, Laminieren wie auch Düsenbeschichtung. Auch hier ist keine über die mechanische Stabilisierung hinausgehende Funktionalität der Polymerschicht offenbart.

In der DE 19 55 853 A1 ist ein Verbund einer Glasfolie mit ein- oder beidseitiger Kunststoffbeschichtung offenbart. Ziel ist es, einen Verbundwerkstoff zu schaffen, der auch unter Einfluss von Wärme Undurchlässigkeit für Gase und Wasserdampf sowie hohe Flexibilität aufweist. Es werden Herstellungsmöglichkeiten offenbart wie Extrusion der Polymere oder die Laminierung von Folien. Teilweise weisen die Folien Klebemasse und Haftvermittler auf und werden unter Anwendung von Wärme verpresst. Der Verbund dient ausschließlich der mechanischen Stabilisierung der Glasfolie.

In der EP 2 363 383 A1 ist ein Laminat aus dünnem Glas und verstärkenden Zwischenschichten aus thermoplastischem Harz offenbart. Die Harze sind durch Haftvermittler chemisch an das Glas gebunden. Es handelt sich um O-H **terminierte** Polymere, die über die Epoxygruppen des Haftvermittlers an das Glas gebunden sind. Die verstärkende Eigenschaft des Harzes liegt damit direkt am Glas an und wird nicht durch weiches PSA unterbrochen. Das Glas ist beidseitig mit Haftvermittler und Harz beschichtet, und es ergibt sich ein komplexer Aufbau.

Aus der JP 2008 273 211 ist die Verstärkung eines Dünnglases, vorzugsweise 10 bis 70 $\mu$m, mittels Polymer, vorzugsweise 10 - 200 $\mu$m, bekannt, teilweise auch mit Haftvermittlern oder auch mit Klebemasse. Da Glas mit sinkender Dicke zwar umso flexibler wird, jedoch die Wasser- und Gasdurchlässigkeit steigt, soll durch die Harzbeschichtung des Dünnglases wieder eine gute Barriere zum Schutz der verkapselten, vorzugsweise organischen Elektronik hergestellt werden. Auch hier handelt es sich bei der Polymerschicht um eine mechanische Stabilisierung des Dünnglases. Als Verfahren zur Aufbringung der Polymerverstärkung ist nur die Lamination offenbart.

In der DE 102 00 131 A1 sind biegeelastische Verbunde aus Glas mit mindestens einer polymerverstärkten Seite beschrieben. Es werden verschiedene Multilayeraufbauten offenbart, wobei dort auch mehrere Glas- und Polymerschichten in einem Laminat vorgesehen sind. Die Schichten sind durch Haftvermittler verbunden, die auch Haftkleber oder Verbindungen mit Silangruppen sein können. Durch Schichtfolgenbildung bildet sich ein biegeelastischer Verbund aus. Auch hier ist nur die mechanische Stabilisierung des Glases durch einen Polymerfilm beschrieben. Es werden permeationshemmende Polymere bevorzugt.

In der EP 2 204 355 A1 sind verschiedene Prozesse zur Herstellung eines Dünnglases mit einer Polymerbeschichtung zur Stabilisierung des Dünnglases beschrieben. Es werden verschiedene Prozessmöglichkeiten für das Aufbringen des Polymers offenbart. Die Beschichtung findet direkt nach der Glasherstellung oder während der Glasherstellung statt, um eine Beschädigung des Dünnglases von vornherein zu vermeiden. Die Beschichtung erfolgt vorzugsweise durch Lamination eines Polymerfilms. Der Polymerfilm kann nach dem Laminieren auch gehärtet werden. Die Polymerschicht stabilisiert das Dünnglas. Auch hier wird nur eine mechanische Stabilisierung des Polymerfilms beschrieben.

In der WO 2008/093153 A1 sind verschiedene Verfahren zur Herstellung von Dünnglas beschrieben. Durch die Verfahren sollen sehr breite Glassheets hergestellt werden können. Es wird eine strangförmige Glasschmelze geblasen, wodurch sich das Glas dehnt, und der entstehende Schlauch wird zu einem Band geschnitten. Das Band wird mittels Walzen gestreckt. Es wird des Weiteren eine Inline-Polymerbeschichtung aus Polyamid und Acrylamid genannt. Zum einen wird die Beschichtung des Glasstranges vor dem Aufblasen offenbart, wobei das Polymer dann mitaufgeblasen wird, und zum anderen eine Beschichtung der entstehenden Dünnglashülle. Der Glasschlauch läuft durch einen Beschichtungsring und wird mit flüssigem Polymer beschichtet mit einer Dicke von 10 bis 150 $\mu$m. Die Polymerschutz-

schicht soll das Glas beim Gebrauch, vor allem beim Schneiden, schützen. Eine über die mechanische Stabilisierung hinausgehende Funktionalität des Polymerfilms ist nachteiligerweise nicht offenbart.

In der US 2013/0196163 A1 wird das Aufbringen eines fluiden Beschichtungsmaterials aus Acrylatoligomeren beschrieben, das nach dem Aufbringen mittels UV-Strahlen gehärtet wird. Die ausgehärtete Schicht ist eine Klebschicht mit einer Schichtdicke von weniger als 10 $\mu$m, die zur Verbindung mit weiteren Schichten dient.

Es sind somit im Stand der Technik zwar verschiedene Verfahren zur Beschichtung von Dünnglas bekannt, die es ermöglichen, eine Dünnglasfolie mechanisch zu stabilisieren. Es besteht jedoch weiterhin das Problem der sich von selbst fortsetzenden Mikrorissbildung unter Spannung.

Es ist Aufgabe der vorliegenden Erfindung, ein Verfahren zur Lagerung einer Dünnglasfolie zur Verfügung zu stellen, das längere Lagerungszeiten unter Spannung im aufgerollten Zustand ermöglicht, sowie einen aufgerollten Dünnglasverbund zur Verfügung zu stellen, der eine längere Lagerung einer aufgerollten Dünnglasfolie ermöglicht.

Die Aufgabe wird in ihrem ersten Aspekt durch ein eingangs genanntes Verfahren mit den Merkmalen des Anspruchs 1 und in ihrem zweiten Aspekt durch einen eingangs genannten aufgerollten Dünnglasverbund mit den Merkmalen des Anspruchs 10 gelöst.

Zunächst ist unter einer Folie ein flächenförmiges Gebilde zu verstehen, dessen Abmessungen in einer Raumrichtung, nämlich Dicke oder Höhe, signifikant kleiner sind als in den beiden anderen Raumrichtungen, die die Hauptausdehnung definieren, nämlich Länge und Breite. Die Folie kann einfach zusammenhängend oder auch durchbrochen ausgebildet sein. Sie kann aus einem einzigen Material oder aus bereichsweise unterschiedlichen Materialien bestehen. Die Folie kann über ihre gesamte Flächenausdehnung eine konstante Dicke oder aber auch unterschiedliche Dicken aufweisen. Die Folie kann aus einer einzigen Schicht bestehen oder aus mehreren Schichten, die deckungsgleich oder zumindest teilweise nicht überdeckend angeordnet sein können.

Unter einer Dünnglasfolie wird eine Folie mit einer Dicke von 15 bis 200 $\mu$m, vorzugsweise 20 bis 100 $\mu$m, vorzugsweise 25 bis 75 $\mu$m und besonders bevorzugt 30 bis 50 $\mu$m verstanden.

Günstigerweise handelt es sich bei der Dünnglasfolie um ein Borosilikatglas, beispielsweise das D 263 T ECO der Firma *Schott,* ein Alkalisilikatglas oder ein Aluminiumborosilikatglas, wie das AF 32 ECO, ebenfalls von der Firma *Schott.*

Günstigerweise ist die UV-Transmission bei alkalifreien Dünngläsern, wie beispielsweise dem AF 32 ECO, höher als bei alkalihaltigen Dünngläsern. Für UV-härtende Klebemittel können daher Initiatoren mit Absorptionsmaxima im UC-C-Bereich besser verwendet werden, wodurch die Stabilität des unvernetzten Klebemittels gegenüber Tageslicht erhöht wird.

Alkalihaltige Dünngläser wie D 263 T ECO weisen einen höheren Wärmeausdehnungskoeffizienten auf und passen daher mit möglicherweise polymeren Bestandteilen der Klebemittel- oder Trägermaterialschicht oder einer optoelektronischen Anordnung zusammen, auf denen der erfindungsgemäße Dünnglasverbund aufgebracht ist und deren Bauteile vom Dünnglasverbund eingekapselt werden.

Die Dünngläser können im Down-Draw-Prozess, wie er beispielsweise in der WO 00/41978 A1 offenbart ist, hergestellt werden oder in Verfahren, wie sie beispielsweise in der EP 1 832 558 A1 offenbart sind. Dünnglasfolien werden vorzugsweise als aufgerollte Bänder zur Verfügung gestellt. Derartige Dünnglasfolien werden unter der Bezeichnung *Willow*® Gläser von der Firma *Corning* angeboten. Die Dünnglasfolien lassen sich günstigerweise mit bandförmig bereitgestellten Klebemassen, beispielsweise zur Verkapselung elektronischer Aufbauten, laminieren, wie sie in der DE 10 2008 062 130 A1, DE 10 2008 047 964 A1, DE 10 2008 037 866 A1 und DE 10 2008 060 113 A1 sowie DE 10 2010 043 866 A1, DE 10 2010 043 871 A1, DE 10 2009 036 970 A1, DE 10 2008 061 840 A1 beschrieben sind.

Erfindungsgemäß wird der eingangs beschriebenen Spannungsrisskorrosion der aufgerollten Dünnglasfolie durch Wasser dadurch entgegengewirkt, dass die Dünnglasfolie mit zwei Seiten bereitgehalten wird, dass wenigstens eine Seite der Dünnglasfolie mit einem fluiden Beschichtungsmaterial vollflächig beschichtet wird, das mindestens ein Trocknungsmittel umfasst, dass das Beschichtungsmaterial direkt auf der wenigstens einen Seite der Dünnglasfolie zu einer festen, bevorzugt polymeren Beschichtung abbindet und dass die beschichtete Dünnglasfolie zur Lagerung aufgerollt wird. Vorzugsweise erfolgt der gesamte Abbindevorgang direkt auf der wenigstens einen Seite der Dünnglasfolie.

Günstigerweise wird die Dünnglasfolie durch das Beschichten mit einem fluiden Beschichtungsmaterial und dessen nachträglichem Abbinden nur sehr geringen oder fast gar keinen mechanischen Belastungen ausgesetzt, wie beispielsweise beim Laminieren durch Druck- und Temperatureinwirkung. Einer Rissbildung während des Beschichtungsvorganges wird daher erfindungsgemäß entgegengewirkt.

Durch die Hinzunahme eines Trocknungsmittels in das Beschichtungsmaterial wird nach dem Abbinden ein enger Kontakt zwischen der Dünnglasfolienseite und dem Trocknungsmittel hergestellt.

Das Trocknungsmittel bindet vorteilhafterweise in den Dünnglasverbund eingedrungenes Wasser und verhindert damit ein Fortschreiten der Spannungsrisskorrosion.

Erfindungsgemäß ist die das Trocknungsmittel enthaltende Schicht vorzugsweise flächig auf die radial äußere Seite der aufgerollten Dünnglasfolie aufgebracht und liegt damit in engem Kontakt an der durch die Biegung innerhalb der Dünnglasfolie unter stärkerer Zugspannung stehenden Seite an. Flächig beschichtet bedeutet dabei, dass ein im Wesentlichen geschlossener Film hergestellt wird, der keine gewollten kleinräumigen Durchbrüche wie zum Beispiel eine Perforation oder ein Druckraster aufweist. Bezogen auf die Geometrie der Dünnglasfolie können aber Teilbereiche von der Beschichtung freigehalten werden. Flächig bedeutet also nicht, dass die gesamte Fläche des Dünnglasbandes oder -abschnitts beschichtet sein muss. Zum Beispiel können Teilbereiche am Rand für das Applizieren eines Kantenschutzes freigehalten werden. Besonders vorzugsweise ist die das Trocknungsmittel enthaltende Schicht vollflächig auf die radial äußere Seite der aufgerollten Dünnglasfolie aufgebracht. In diesem Fall ist die gesamte Fläche des Dünnglasbandes oder-abschnitts beschichtet.

Unter der radial äußeren Seite ist hier die Seite der Dünnglasfolie zu verstehen, die im Querschnitt senkrecht zur Längsrichtung der Rolle, zu der die Dünnglasfolie aufgerollt ist, in radialer Richtung die Außenseite jeder der Folienlagen der Rolle darstellt. Im aufgerollten Zustand ist eine radial äußere Seite der Dünnglasfolie einer höheren intrinsischen Zugspannung ausgesetzt als eine radial innere Seite der Dünnglasfolie, die in der Regel einer Druckspannung ausgesetzt ist. Die radial äußere Seite ist damit in höherem Maße für Spannungsrisskorrosion anfällig als die radial innere Seite der Dünnglasfolie.

Als Beschichtungsmaterialien können alle bekannten Materialien verwendet werden, die aus einer fluiden Phase beschichtet werden können und die zu einer festen polymeren Beschichtung abbinden. Die Beschichtungsmaterialien können beispielsweise als Monomer, in Lösung, Dispersion oder als Schmelze vorliegen.

Ein Maß für die Fließfähigkeit des fluiden Beschichtungsmaterials ist die Viskosität.

Die Viskosität kann nach DIN 53019 bestimmt werden, und zwar wenn die Viskosität des fluiden Beschichtungsmaterials unter $10^3$ Pas liegt. Als Fluid wird eine Viskosität von weniger als $10^8$ Pas bezeichnet. Die Viskosität wird in einem Zylinderrotationsviskosimeter mit einer Standardgeometrie nach DIN 53019-1 bei einer Messtemperatur von 23 °C und einer Schergeschwindigkeit $1 \times s^{-1}$ gemessen.

Alternativ wird die Viskosität ermittelt nach ISO 6721-10, und zwar wenn die Viskosität des fluiden Beschichtungsmaterials bei größer oder gleich $10^3$ Pas liegt. Die Viskosität wird im oszillatorischen Scherexperiment (Dynamisch mechanische Analyse, DMA) unter Torsionsbelastung bei einer Temperatur von 23 °C und einer Frequenz von 1 rad/s bestimmt. Der Test ist in ISO 6721-10 ausführlich beschrieben. Er wird in einem schergeschwindigkeitskontrollierten Rheometer unter Torsionsbelastung gefahren, wobei eine Platte-Platte-Geometrie mit einem Plattendurchmesser von 25 mm verwendet wird.

Vorzugsweise liegt die Viskosität oberhalb von 1 mPas, besonders bevorzugt oberhalb von 10 mPas. Unterhalb der genannten Viskositäten besteht die Gefahr, dass das fluide Beschichtungsmaterial beim Beschichten verläuft.

Weiter bevorzugt liegt die Viskosität unterhalb von $10^5$ Pas, besonders bevorzugt unterhalb von 10 Pas. Bei höheren Viskositäten ist eine gleichförmige Beschichtung schwierig zu realisieren.

Um die Viskosität des Beschichtungsmaterials einzustellen, können bekannte rheologisch wirksame Additive dem Beschichtungsmaterial zugesetzt werden, also zum Beispiel Verdicker newtonscher und nicht newtonscher Art, Fließverbesserer auf der Basis von Silikonen oder solche, die kein Silikon enthalten. Additive werden zum Beispiel in Bodo Müller Additive kompakt, Hannover; Vincentz Network GmbH & Co KG, 2009, beschrieben.

Das fluide Beschichtungsmaterial kann beispielsweise als Lösung, Dispersion oder Schmelze vorliegen. Dafür geeignete Beschichtungsmaterialien sind beispielsweise durch radikalische Polymerisation erhältliche Polymere, Polykondensate, zum Beispiel Polyester, oder Polyaddukte, zum Beispiel Polyurethane oder Polyimide oder Polyamide. Auch hybride anorganisch-organische Beschichtungen, zum Beispiel Sol-Gel-Beschichtungen, sind möglich und werden hier als erfindungsgemäß umfasst.

In einer anderen bevorzugten Ausführungsform des erfindungsgemäßen Verfahrens werden zunächst die Aufbaukomponenten des Polymers aufgebracht, zum Beispiel radikale polymerisierbare Verbindungen (Monomere) oder daraus gebildete Prepolymere. Beim Aufbringen von Monomeren erfolgt die Polymerisation und Vernetzung auf der Glasfolienoberfläche, im Falle des Aufbringens von Prepolymeren die Vernetzung auf der Glasfolienoberfläche. Die Aufbaukomponenten können dabei in Reinform, als Lösung, als Dispersion oder als Schmelze vorliegen.

Vorzugsweise wird die Polymerisation und/oder Vernetzung durch Wärme oder energiereiche Strahlung, zum Beispiel NIR-Licht und/oder UV-Licht aktiviert.

Als radikalisch polymerisierte Polymere, die durch die vorstehende Polymerisation und/oder Vernetzung gebildet werden, kommen insbesondere auch solche in Betracht, die zu mehr als 60 Gewichtsprozent, besonders bevorzugt zu mehr als 80 Gewichtsprozent aus Monomeren mit mindestens einer Acryl- oder Methacrylgruppe bestehen. Diese werden auch Polyacrylate genannt.

Grundsätzlich können zur Ausführung des erfindungsgemäßen Verfahrens Polymere verwendet werden, die herkömmliche Lacksysteme ausbilden, insbesondere zweikomponentige Polyurethanlacke, aminoplastharzvernetzbare Einbrennlacke, säurehärtende Melaminharze, Epoxidharze und UV-härtbare Lacke, zum Beispiel auf Basis monomerer und/oder oligomerer acrylisch ungesättigter Stoffe. Auch Sol-Gel-Lacke sind möglich. Für Anwendungen, bei denen hohe Temperaturen und starke chemische Belastungen auftreten, werden auch Polyimide und Lösungen polyimidbildender Vorstufen verwendet.

Vorzugsweise werden Polymerschichten aus Polymeren gebildet, die mit energiereicher, insbesondere UV-Strahlung gehärtet werden, insbesondere die oben beschriebenen Polyacrylate. Dabei erfolgt die Härtung der Ausgangsverbindungen der Polyacrylate (Monomere, Oligomere und Prepolymere) mit strahlungshärtenden Gruppen, insbesondere Acryl- und Methacrylgruppen, vorzugsweise nach dem Beschichten unter Verwendung von Elektronenstrahlen oder durch UV-Strahlung.

Verwendet werden können auch Polymerschichten aus ausgelierten PVC-Plastisolen oder aus aromatischen Polyimiden. Des Weiteren können auch Polymerschichten aus halogenhaltigen Polymeren, insbesondere Polyvinylidenchlorid, verwendet werden.

Vorzugsweise können auch anorganisch-organische Hybridmaterialien verwendet werden, wie beispielsweise Sol-Gel-Lacke, bei denen in der Regel Aufbaukomponenten in einer fluiden Phase auf die Glasfolie aufgetragen und dort abgebunden werden. Beispiele für solche Beschichtungen sind zum Beispiel in H. Schmidt "Modification of Glass Surfaces by Multifunctional Chemical Coatings, in: Fundamentals of Glass Science & Technology - 3rd ESG Conf. Würzburg Germany, 1995, beschrieben.

In einer weiteren bevorzugten Ausführungsform des erfindungsgemäßen Verfahrens weist das polymere Beschichtungsmaterial eine besonders hohe Permeationsbarriere für Wasserdampf auf (WVTR < 50 $g/m^2$ x Tag, insbesondere < 20 $g/m^2$ x Tag).

Bevorzugt sind hier strahlenvernetzte Acrylatlacke zu nennen, wie sie in J. Oliver: Influences on Barrier Performance of UV/EB Cured Polymers; RadTech Conference, USA, 2010, dargestellt sind. Auch Beschichtungen auf der Basis von Polyvinylidendichlorid (PVdC) sind bevorzugt. Solche Beschichtungspolymere werden zum Beispiel unter dem Handelsnamen IXAN von der Firma Solvay und Saran von der Firma Dow angeboten. Weiterhin bevorzugt sind Lösungen von Synthesekautschuken, wie zum Beispiel Polyisobutylen.

Unter dem Merkmal des Abbindens wird verstanden, dass das fluide Beschichtungsmaterial in eine feste Phase übergeht und damit seine Kohäsionsfestigkeit gewinnt und die Beschichtung ihre physikalischen und chemischen Eigenschaften entwickelt. Das Abbinden kann durch physikalische Vorgänge, beispielsweise Gelbildung, Hydratation, Abkühlung, Verdunsten flüchtiger Bestandteile und/oder chemische Reaktionen, wie Polymerisation, Vernetzung, Oxidation, Vulkanisation bewirkt werden.

Es sind folgende Abbindemechanismen, die bei normaler oder erhöhter Temperatur stattfinden können, beispielhaft erwähnt:

- Verdunsten oder Abkühlen von Wasser bzw. organischen Lösungsmitteln, beispielsweise Lösungsmittel, Klebstoffe, Dispersionsklebstoffe
- Gelatinierung (zum Beispiel Plastisole)
- Reaktion unter Luftabschluss und Metallkontakt (zum Beispiel anaerobe Klebstoffe)
- Reaktion durch Luftfeuchtigkeit (zum Beispiel Cyanacrylate, Einkomponenten-Polyurethane)
- Reaktion durch Wärmezufuhr (zum Beispiel Einkomponenten-Reaktionsklebstoffe)
- Reaktion durch Einfluss von Strahlen (zum Beispiel UV- oder elektronenstrahlhärtende Acrylate
- Reaktion nach dem In-Kontakt-Bringen von zwei oder mehreren Komponenten (zum Beispiel kalt- und warmhärtende Reaktionsklebstoffe)
- Verdunsten oder Ablüften organischer Lösungsmittel und anschließende Reaktion von zwei Komponenten (zum Beispiel lösungsmittelhaltige Reaktionsklebstoffe)

Bei den physikalisch abbindenden Systemen befinden sich die Beschichtungsmoleküle zum Zeitpunkt des Auftragens in der Regel bereits in einem makromolekularen Endzustand. Von den Parametern Temperatur und Zeit abhängige chemische Reaktionen finden nicht mehr statt. Die Endfestigkeit ergibt sich direkt nach dem Ablauf der physikalischen Abbindevorgänge. Bei den chemisch reagierenden Systemen sind die Endfestigkeit sowie das werkstoffmechanische Verhalten eine zeit- und temperaturabhängige Funktion, die für den jeweiligen Härtungsmechanismus spezifisch ist.

Unter einem Trocknungsmittel wird hier ein Stoff verstanden, der zur Aufnahme (Sorption) von Wasser in der Lage ist. Die Sorption des Wassers durch das Trocknungsmittel kann dabei beispielsweise durch Absorption oder Adsorption erfolgen, wobei Adsorption sowohl in Form von Chemisorption als auch in Form von Physisorption auftreten kann. Das Trocknungsmittel ließe sich daher auch als "Sorbens" oder "Sorptionsmittel" bezeichnen.

Der aufrollbare Dünnglasverbund kann daher erfindungsgemäß durch das Trocknungsmittel Wasser aus der Dünnglasfolie heraus aufnehmen und durch die Dünnglasfolie und/oder die Beschichtungsmaterialschicht hindurchtretendes Wasser aufnehmen. Geeignete Trocknungsmittel sind beispielsweise Salze wie Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumdithionit, Natriumcarbonat, Natriumsulfat, Kaliumdisulfit, Kaliumcarbonat, Magnesiumcarbonat; Schichtsilikate wie Montmorillonit und Bentonit; Metalloxide wie Bariumoxid, Calciumoxid, Eisenoxid, Magnesiumoxid, Natriumoxid, Kaliumoxid, Strontiumoxid, Aluminiumoxid (aktiviertes Alumina) und Titandioxid; weiter Kohlenstoffnanoröhrchen, Aktivkohle, Phosphorpentoxid; leicht oxidierbare Metalle wie beispielsweise Eisen, Calcium, Natrium und Magnesium; Metallhydride wie beispielsweise Calciumhydrid, Bariumhydrid, Strontiumhydrid, Natriumhydrid und Lithiumaluminiumhydrid; Hydroxide wie Kaliumhydroxid und Natriumhydroxid; Metallkomplexe wie zum Beispiel Aluminiumacetylacetonat; weiterhin Kieselsäuren wie zum Beispiel Silica-Gel; Kieselgur; Zeolithe; des Weiteren organische Absorber, beispielsweise Polyolefin-Copolymere, Polyamid-Copolymere, PET-Copolyester, Anhydride von einfachen und mehrfachen Carbonsäuren wie Essigsäureanhydrid, Propionsäureanhydrid, Buttersäureanhydrid oder Methyltetrahydrophthalsäureanhydrid oder weitere auf Hybridpolymeren basierte Absorber, die meist in Kombination mit Katalysatoren wie beispielsweise Cobalt verwendet werden; Carbodiimide; weitere organische Absorber wie etwa schwach vernetzte Polyacrylsäure, Polyvinylalkohol, Ascorbate, Glucose, Gallussäure oder ungesättigte Fette und Öle.

Erfindungsgemäß können auch Mischungen aus zwei oder mehreren Trocknungsmaterialien eingesetzt werden.

Unter Trocknungsmitteln werden hier ausdrücklich nicht Silane verstanden, Silane dienen demgegenüber als Haftverstärker, da Silane mit der Glasoberfläche chemisch reagieren und demgegenüber als Haftverstärker für Verklebungen auf Glas eingesetzt werden. Eine solcherart mit der Dünnglasfolie verbundene weitere Schicht könnte kaum mehr von der Dünnglasfolie abgelöst werden, ohne diese zu zerstören. Besonders bevorzugt ist das Trocknungsmittel ausgewählt aus der Gruppe umfassend Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumcarbonat, Natriumsulfat, Kaliumcarbonat, Zeolithe, Calcium, Magnesium, Bariumoxid, Calciumoxid, Magnesiumoxid, Natriumoxid, Kaliumoxid, Strontiumoxid, Aktivkohle, Phosphorpentoxid, Calciumhydrid, Bariumhydrid, Strontiumhydrid, Natriumhydrid und Lithiumaluminiumhydrid, Kaliumhydroxid, Natriumhydroxid, Essigsäureanhydrid, Propionsäureanhydrid, Buttersäureanhydrid, Methyltetrahydrophthalsäureanhydrid und Carbodiimide sowie Mischungen von zwei oder mehreren der vorstehenden Substanzen. Diese Materialien weisen eine hohe Sorptionskapazität gegenüber Wasser auf.

Unter "Carbodiimiden" werden Verbindungen der allgemeinen Formel $R^1$-N=C=N-$R^2$ verstanden, wobei $R^1$ und $R^2$ organische Reste, insbesondere Alkyl- oder Arylreste sind, die gleich oder verschieden sein können.

Ganz besonders bevorzugt ist das Trocknungsmittel ausgewählt aus der Gruppe umfassend Barium, Calcium, Calciumsulfat, Calciumchlorid, Calciumoxid, Natriumsulfat, Kaliumcarbonat, Kupfersulfat, Magnesiumperchlorat, Magnesiumsulfat, Lithiumchlorid und Zeolithe sowie Mischungen von zwei oder mehreren der vorstehenden Substanzen. Diese Trocknungsmittel bieten den Vorteil, dass sie sich leicht in die betreffende Schicht des Klebebands einarbeiten lassen, ein hohes Sorptionsvermögen zeigen und regenerierbare Trocknungsmittel sind. Darunter werden Substanzen verstanden, die Wasser unter bestimmten Bedingungen wieder abgeben können und dadurch in einen Zustand gelangen, der sie zu erneuter Wasseraufnahme befähigt. Dies ermöglicht ein Verfahren, bei dem das das Trocknungsmittel enthaltende Klebeband vor dem In-Kontakt-Bringen mit dem Flächengebilde von gegebenenfalls bis zu diesem Zeitpunkt aufgenommenem Wasser weitgehend befreit wird, beispielsweise durch Trocknen. Dadurch steht vorteilhaft bei Verwendung des Klebebands die volle Trocknungsmittelkapazität zur Verfügung.

Insbesondere ist das Trocknungsmittel ausgewählt aus der Gruppe umfassend Calciumoxid, Calciumsulfat, Calciumchlorid, pyrogene Kieselsäuren und Zeolithe sowie Mischungen von zwei oder mehreren der vorstehenden Substanzen. Diese Materialien weisen besonders hohe Kapazitäten für die Aufnahme von Wasser auf, sind größtenteils regenerierbar, lassen sich hervorragend in das Klebeband einarbeiten und beeinträchtigen die Funktion der einzelnen Schichten gar nicht beziehungsweise nur in vernachlässigbarer Art und Weise.

In einer besonderen Ausführungsform der Erfindung ist das Trocknungsmittel ausgewählt aus Calciumoxid, Calcium, Eisen, Barium, Lithiumchlorid und Cobaltchlorid. Diese Substanzen lassen über eine Änderung ihrer optischen Eigenschaften Rückschlüsse auf den Wassergehalt des Flächengebildes zu. So lange also noch freie Trocknungsmittelkapazität anhand des optischen Erscheinungsbildes des Klebebands erkennbar ist, kann dies als Indiz dafür gelten, dass noch kein oder allenfalls wenig Wasser in das zu schützende Flächengebilde diffundiert ist. Metallisches Calcium beispielsweise verliert seine metallisch-undurchsichtige Erscheinung und wird zunehmend transparent; Cobaltchlorid ändert seine Farbe bei Wasseraufnahme von blau zu rosa. Insbesondere wird das Trocknungsmittel Calciumoxid verwendet.

Vorteilhaft beträgt der Anteil des Trocknungsmittels in der das Trocknungsmittel enthaltenden Beschichtung jeweils mindestens 1 Gew.-%, bevorzugt mindestens 10 Gew.-%, jeweils bezogen auf das Gewicht der Trocknungsmittel enthaltenden Schicht. Der maximale Anteil des Trocknungsmittels in der das Trocknungsmittel enthaltenden Schicht des Klebebands ist jeweils durch die schichtbildenden Eigenschaften des Beschichtungsmaterials t begrenzt und kann bis zu einem Anteil von 95 Gew.-% reichen.

Der Gehalt hängt wesentlich von der gewünschten Aufnahmekapazität für das Wasser ab.

Wenn zum Beispiel nur eine geringe Aufnahmekapazität erforderlich ist, reicht gegebenenfalls die Verwendung eines Trocknungsmittels in einem geringen Gehalt aus und mit geringer Aufnahmekapazität. In einer bevorzugten Ausführungsform enthält die das Trocknungsmittel enthaltende Schicht bzw. enthalten die das Trocknungsmittel enthaltenden Schichten daher jeweils 1 bis 5 Gew.-% Trocknungsmittel.

Bei einer sehr hohen erforderlichen Aufnahmekapazität der Beschichtung muss jedoch ein relativ hoher Gehalt an Trocknungsmittel in der Beschichtung verwendet werden, wobei auch das Trocknungsmittel eine hohe Aufnahmekapazität besitzen sollte. Aber auch ein Trocknungsmittel mit geringer Aufnahmekapazität kann verwendet werden, wenn dies Kosten- oder Verträglichkeitsaspekte anraten. Im Rahmen einer weiteren bevorzugten Ausführungsform der erfindungsgemäßen Beschichtung enthält dieses daher 20 bis 95 Gew.-%, bezogen auf das Gesamtgewicht der Beschichtung.

Die abgebundene Schicht aus dem fluiden Beschichtungsmaterial kann permanent oder reversibel mit der Dünnglasfolie verbunden sein. Als reversibel wird eine Schicht bezeichnet, wenn sie sich mit einer Kraft von weniger als 2 N/cm, bevorzugt weniger als 1 N/cm, von der Glasoberfläche abziehen lässt, ermittelt auf Floatglas analog zur ISO 29862 (Methode 3) bei 23 °C und 50 % relativer Luftfeuchtigkeit bei einer Abzugsgeschwindigkeit von 300 mm/min und einem Abzugswinkel von 180°. Als Verstärkungsband wird dabei ein Klebeband mit entsprechend höherer Klebkraft auf der Beschichtung verwendet.

Vorzugsweise ist auf die Dünnglasfolie zusätzlich zur erfindungsgemäßen Beschichtung eine die Dünnglasoberfläche stabilisierende Beschichtung aufgebracht, insbesondere ist eine organische oder Sol-Gel-Beschichtung auf die Dünnglasoberfläche aufgebracht. Die Beschichtung vermindert auch die Diffusion von Wasser und Wasserdampf an die Glasoberfläche. Organische Beschichtungen können auch die Spannungsrisskorrosion verringern. Solche Beschichtungen sind zum Beispiel in H. Furuchi; Glass Technology Vol. 35 (No 6) 1994, Seiten 272 bis 275; M. Mizuhashi. et. al; Reports Res. Lab. Asahi Glass Co. ltd.; 36 [1] (1986). Seiten 1 bis 14 und H.K. Schmidt; 3'd Conference European Society of Glass Science and Technology (ESG); Würzburg 1995, offenbart.

In einer bevorzugten Weiterbildung der Erfindung enthält das Beschichtungsmaterial zusätzlich zum Trocknungsmittel ein Silan. Silane werden bei Glassubstraten im Stand der Technik häufig als Kopplungsagenzien eingesetzt, um die Haftung auf Glas zu erhöhen. Beispiele sind in der US 6,159,608 B, der WO 2008/036222 A, der JP 2000 003 782 A, der US 6,501 014 B1 der WO 2011/084323 A1 sowie der EP 0 924 761 A1 aufgeführt. Dabei kann das Silan nicht nur vor der Beschichtung als Primer auf das Glas aufgetragen werden, sondern eben auch im Beschichtungsmaterial enthalten sein. Vorzugsweise werden Silane eingesetzt, die chemische Gruppen enthalten, die mit dem Beschichtungsmaterial gut verträglich sind oder sogar kovalente, ionische oder koordinative Bindungen mit dem Beschichtungsmaterial eingehen können. Vorzugsweise enthalten also permanent auf der Dünnglasfolie verbleibende Beschichtungen ein Silan.

Unter "Silanen" werden Verbindungen der allgemeinen Formel $R_a$-Si-$X_{4-a}$ oder deren partielle Kondensationsprodukte verstanden. In der Formel steht a für eine ganze Zahl von 0 bis 3 und bevorzugt für 0 oder 1. X steht für eine hydrolysierbare Gruppe, beispielsweise und bevorzugt für ein Halogen-Atom, insbesondere Chlor, eine Alkoxy-Gruppe wie beispielsweise eine Methoxy-, Ethoxy-, n-Propoxy-, iso-Propoxy-, n-Butoxy-, sec-Butoxy- oder tert-Butoxy-Gruppe oder für eine Acetoxy-Gruppe. Weitere, dem Fachmann bekannte Beispiele für hydrolysierbare Gruppen sind im Sinne der vorliegenden Erfindung ebenfalls einsetzbar. Sind mehrere Substituenten X vorhanden, so können diese gleich oder voneinander verschieden sein. R steht für einen gegebenenfalls substituierten Kohlenwasserstoffrest, beispielsweise für eine Methyl-, Ethyl-, n-Propyl-, iso-Propyl-, n-Butyl-, sec-Butyl-, tert-Butyl-Gruppe, eine Pentyl-Gruppe sowie deren verzweigte Isomere, eine Hexyl-Gruppen sowie die verzweigten Isomere, eine Heptyl-Gruppe sowie die verzweigten Isomere, eine Octyl-Gruppe sowie die verzweigten Isomere, eine Nonyl-Gruppe sowie die verzweigten Isomere, eine Decyl-Gruppe sowie die verzweigten Isomere, eine Undecyl-Gruppe sowie die verzweigten Isomere, eine Dodecyl-Gruppe sowie die verzweigten Isomere, eine Tetradecyl-Gruppe sowie die verzweigten Isomere, eine Hexadecyl-Gruppe sowie die verzweigten Isomere, eine Octadecyl-Gruppe sowie die verzweigten Isomere oder eine Eicosyl-Gruppe sowie die verzweigten Isomere. Die Kohlenwasserstoffreste können zudem ringförmige und/oder aromatische Bauteile enthalten. Repräsentative Strukturen dafür sind Cyclohexyl-, Phenyl- und Benzyl-Gruppen. Gegebenenfalls enthält/enthalten der/die Kohlenwasserstoffrest(e) R beispielsweise einen oder mehrere Heteroatomhaltige Substituenten wie Aminogruppen, Aminoalkylgruppen, Glycidyloxygruppen, (Meth)acryloxygruppen und dergleichen. Sind mehrere Substituenten R vorhanden, so können diese gleich oder voneinander verschieden sein.

In einer anderen bevorzugten Ausführungsform des erfindungsgemäßen Verfahrens wird eine reversible polymere Beschichtung verwendet, die günstigerweise ein mit dem Beschichtungsmaterial unverträgliches Silan enthält, d. h. ein solches Silan, das keine kovalente, ionische oder koordinative Bindung mit dem Beschichtungsmaterial eingehen kann. Damit kann eine Erhöhung der Haftung der reversiblen Beschichtung am Dünnglas weitgehend vermieden werden. Durch die Unverträglichkeit des Silans mit dem Beschichtungsmaterial reichern sich die migrierfähigen Silanmoleküle an der Grenzfläche zwischen Glas und Beschichtung an und kommen somit in großer Menge mit dem Glas in Kontakt. Aufgrund des sich so bildenden Silanfilms auf dem Glas können Mikrorisse sogar überbrückt und die Glasstabilität verbessert werden.

In einer weiteren bevorzugten Ausführungsform des erfindungsgemäßen Verfahrens enthält die Beschichtung ein hydrophobes Silan, beispielsweise Octadecyldimethylchlorosilan. Als hydrophobe Silane werden im Sinne der Erfindung Silane mit mehr als zehn zusammenhängenden Kohlenstoffatomen definiert.

In einer weiteren bevorzugten Ausführungsform des erfindungsgemäßen Verfahrens wird ein zusätzliches Schichtmaterial mit einer besonderes hohen Permeationsbarriere für Wasserdampf auf der nicht mit dem Glas in Kontakt befindlichen Seite des Beschichtungsmaterials angeordnet.

Die zusätzliche Barriereschicht hindert ein oder mehrere spezifische(s) Permeat(e), insbesondere Wasserdampf, daran, in den Dünnglasverbund einzudringen, damit das im Beschichtungsmaterial befindliche Trocknungsmittel nicht durch aus der Umgebung eindiffundierendes Wasser teilweise oder sogar vollständig abgesättigt wird.

Eine derartige Barriereschicht kann aus organischen oder anorganischen Materialien bestehen, beispielsweise aus einer Metallschicht oder einer organischen Schicht oder einer Sol-Gel Schicht.

Besonders bevorzugt ist die Barriereschicht als anorganische Barriereschicht ausgebildet. Als anorganische Barriereschichten eignen sich besonders gut im Vakuum (zum Beispiel mittels Verdampfen, CVD, PVD, PECVD) oder unter Atmosphärendruck (zum Beispiel mittels Atmosphärenplasma, reaktiver Coronaentladung oder Flammenpyrolyse) abgeschiedene Metalle, wie Aluminium, Silber, Gold, Nickel oder insbesondere Metallverbindungen wie Metalloxide, -nitride oder -hydronitride, beispielsweise Oxide oder Nitride des Siliziums, des Bors, des Aluminiums, des Zirkoniums, des Hafniums oder des Tellurs oder Indium-Zinn-Oxid (ITO). Ebenfalls geeignet sind mit weiteren Elementen dotierte Schichten der vorstehend genannten Varianten.

Als besonders geeignetes Verfahren zum Aufbringen einer anorganischen Barriereschicht sind High-Power-Impulse-Magnetron-Sputtering und Atomic-Layer-Deposition zu nennen, durch die sich besonders permeationsdichte Schichten bei geringer Temperaturbelastung der polymeren Beschichtung verwirklichen lassen. Bevorzugt wird eine Permeationsbarriere der polymeren Beschichtung mit zusätzlicher Barriereschicht gegen Wasserdampf (WVTR) von < $1 \text{ g/(m}^{2*}\text{d)}$, wobei der Wert auf die jeweils im Flächengebilde verwendete Dicke der Beschichtung bezogen ist, also nicht auf eine spezifische Dicke normiert ist. Die WVTR wird dabei bei 38° C und 90 % relativer Luftfeuchtigkeit nach ASTM F-1249. In einer weiteren bevorzugten Ausführungsform der Erfindung enthält das Beschichtungsmaterial nach dem Abbinden ohne den Zusatz von Trocknungsmittels weniger als 500 ppm, insbesondere weniger als 100 ppm Wasser.

Die Erfindung wird anhand von zwei Ausführungsbeispielen in fünf Figuren beschrieben. Dabei zeigen:

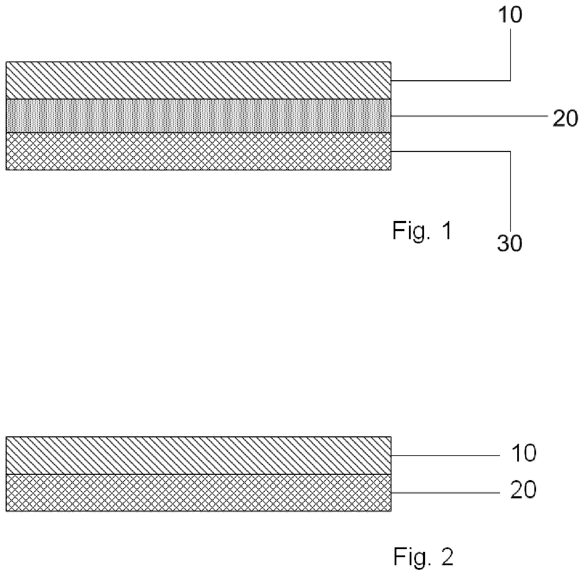

Fig. 1    einen erfindungsgemäßen aufrollbaren Dünnglasverbund mit permeationshemmender Schicht,

Fig. 2    einen aufrollbaren Dünnglasverbund,

Fig.3a    eine Prinzipzeichnung des gebogenen Dünnglasverbundes im Two-Point-Bending Test,

Fig.3b    eine schematische Ansicht der auf dem Dünnglasverbund angeordneten Dehnungsmessstreifen,

Fig. 3c    eine schematische seitliche Ansicht des gebogenen Dünnglases.

Es wurden verschiedene mit Trocknungsmittel gefüllte Beschichtungen hergestellt.

**Beschichtungsmaterialien:**

Folgende Beschichtungsmaterialien 20 zur Ausbildung der erfindungsgemäßen Beschichtung werden angesetzt:

**B1** Strahlenvernetzbares Acrylat-Beschichtungsmaterial:

| | | |
|---|---|---|
| 70 Teile | CN307 | POLYBUTADIENE DIMETHACRYLATE der Firma Sartomer mit einer Viskosität von 750 mPas bei 60 °C |
| 20 Teile | SR833S | TRICYCLODECANE DIMETHANOL DIACRYLATE der Firma Sartomer |
| 5 Teile | Irgacure 500 | Photoinitiator der Firma BASF bestehend aus einer Mischung von 50 % 1-Hydroxy-cyclohexyl-phenyl-ketone und Benzophenone im Verhältnis 1:1 |
| 5 Teile | Ebecryl 7100 | Aminfunktionalisierter Acrylat-Coinitiator |

**B2** Strahlenvernetzbares Acrylat-Beschichtungsmaterial:

| | | |
|---|---|---|
| 85 Teile | Ebecryl 184 | Urethanacrylat-Oligomer der Firma Cytec enthaltend HDDA |
| 5 Teile | HDDA | Hexandioldiacrylat der Firma Cytec |
| 5 Teile | Irgacure 500 | Photoinitiator der Firma BASF bestehend aus einer Mischung von 50 % 1-Hydroxy-cyclohexyl-phenyl-ketone und Benzophenone im Verhältnis 1:1 |
| 5 Teile | Ebecryl 7100 | Aminfunktionalisierter Acrylat-Coinitiator |

**B3:** reversibles Polyisobutylen (PIB)-Beschichtungsmaterial

100 Teile    Oppanol B 150    PIB von BASF, Mn = 425.000 g/mol

Es wird eine Lösung mit einem PIB-Gehalt von 10 Gew.-% hergestellt. Als Lösungsmittel wird Toluol verwendet.

**B4**: PVDC-Beschichtungsmaterial

100 Teile    Ixan SGA1    PVDC-Harz der Firma Solvay

Es wird eine Lösung mit einem PVDC-Gehalt von 25 Gew.-% hergestellt. Als Lösungsmittel wird Methyletherketon verwendet.

Zur Herstellung von Schichten für die Bestimmung der Wasserdampfpermeationsrate der Beschichtungsmaterialien B1 - B4 werden die verschiedenen Beschichtungsmaterialien auf eine Polyethersulfonmembran der Firma Sartorius mittels eines Laborstreichgeräts in einer (getrockneten) Schichtdicke von etwa 50 $\mu$m aufgebracht. Die Membran ist für Wasserdampf hochdurchlässig. Durch die Verwendung der hochdurchlässigen Membran ist gewährleistet, dass lediglich die Wasserdampfpermeationsrate der Beschichtung gemessen wird.

Muster mit den Beschichtungsmaterialien B1 und B2 werden mit einem UV-Cube der Firma Hoenle (Quecksilber-Mitteldruckstrahler) mit einer UV-C-Dosis von 200 mJ/cm$^2$ (250 bis 260 nm-Band) vernetzt.

Die Trocknung der Beschichtungsmaterialien B3 und B4 erfolgt jeweils bei 120 °C über 30 min in einem Labortrockenschrank.

Die Wasserdampfpermeationsrate (WVTR) wird bei 38 °C und 90 % relativer Luftfeuchtigkeit nach ASTM F-1249 gemessen. Der angegebene Wert ist der Mittelwert aus zwei Messungen.

| Bezeichnung | WVTR [g/m$^2$ d] | |
|---|---|---|
| B1 | 34 | |
| B2 | 286 | |
| B3 | 8 | |
| B4 | 3 | |

Folgende Trocknungsmittel werden verwendet:

| Bezeichnung | Beschreibung | Handelsname | Lieferant |
|---|---|---|---|
| G1 | Calciumoxid | Calcium oxide nanopowder | Sigma-Aldrich |
| G2 | Zeolith 3A | Purmol 3 STH | Zeochem |

Die Trocknungsmittel werden mittels einer schnelllaufenden Dispergierscheibe eines Laborrührwerks in die Beschichtungsmaterialien B1 - B4 eingearbeitet. Die Beschichtungsmaterialien werden zuvor mittels ca. 1 mm großer Zeolithkugeln getrocknet, welche vor dem Beschichtungsprozess wieder ausgefiltert werden.

Als Dünnglasfolie wurde ein Glas des Typs D263 T eco der Firma Schott, Mainz, mit einer Dicke von 70 $\mu$m und einer Länge von 100 mm verwendet, die Breite betrug ebenfalls 100 mm.

Die Beschichtung auf der Dünnglasfolie 10 erfolgt analog zu der Beschichtung auf der Membran. Als permeationshemmende zusätzliche Barriereschicht 30 wird in Beispiel V9 eine mit einer anorganischen Barriereschicht versehene Folie der Firma Toppan vor dem Aushärten auf die Beschichtung B2 kaschiert. Die UV-Bestrahlung findet durch die Folie hindurch statt.

| Bezeichnung | Beschreibung | Handelsname | Lieferant | Dicke [$\mu$m] | WVTR [g/m$^2$d] |
|---|---|---|---|---|---|
| T1 | Polyesterfolie mit anorganischer Barriereschicht | GX-P-F | Toppan Printing | 30 | 0,13 |

Als Vergleichsbeispiel wird eine Beschichtung mit dem Beschichtungsmaterial 20 B2 hergestellt, welches kein Trocknungsmittel enthält, sowie eine Wasserdampfpermeationsrate von mehr als 50 g/m$^2$d aufweist.

Tabelle 1: Beschichtungen im erfindungsgemäßen Verfahren:

| Bezeichnung | Beschichtungsmaterial | Trocknungsmittel | Anteil Trocknungsmittel [Gew.-%] | Dicke Beschichtung [µm] | Barriereschicht |
|---|---|---|---|---|---|
| V1 | B1 | G1 | 10 | 100 | - |
| V2 | B2 | G1 | 50 | 100 | - |
| V3 | B3 | G1 | 10 | 100 | - |
| V4 | B4 | G1 | 10 | 100 | - |
| V5 | B1 | G2 | 10 | 100 | - |
| V6 | B2 | G2 | 50 | 100 | - |
| V7 | B3 | G2 | 10 | 100 | - |
| V8 | B4 | G2 | 10 | 100 | - |
| V9 | B2 | G2 | 10 | 100 | T1 |
| C1 | B2 | - | 0 | 100 | - |

Alle Beschichtungsmaterialien 20 zeigten mit dem angegebenen Trocknungsmittelanteil eine Viskosität nach DIN 53019-1 bei einer Messtemperatur von 23 °C und einer Schergeschwindigkeit von 1 s$^{-1}$ bei Verwendung einer Standard-Zylindergeometrie unterhalb von 10000 mPas.

Nach dem Trocknen der Beschichtung wird der minimale Biegeradius R direkt nach der Herstellung bestimmt.

Eine Zwischenlagerung der Beschichtungen auf Dünnglasfolie V1 - V8 sowie des Vergleichsmusters C1 erfolgt direkt nach deren Herstellung über 2 Stunden bei 40 °C und 90 % relativer Feuchte mit einem Biegeradius R von 100 mm, wobei die Dünnglasfolie 10 auf der Innenseite des Radius R liegt, so dass die am stärksten auf Zug beanspruchte Seite der Dünnglasfolie 10 mit der Beschichtung aus Trocknungsmittel aufweisendem Beschichtungsmaterial 20 abgedeckt ist.. Dies simuliert die Zeit zwischen der Herstellung eines aufgewickelten Verbunds und der Verpackung der Rolle.

Danach wird der Verbund in einer permeationsdichten Verpackung (eingeschweißt in einer Aluminiumverbundfolie) bei 60 °C über weitere 60 Tage mit einem Biegeradius R von 100 mm gelagert, wobei die Dünnglasfolie 10 wiederum auf der Innenseite des Radius R liegt, Dann wird der minimale Biegeradius R bestimmt. Die Bestimmung des Wassergehalts erfolgt ebenfalls nach diesen 60 Tagen Lagerung.

Bei Muster V9 erfolgt die Zwischenlagerung der Beschichtung auf Dünnglasfolie direkt nach deren Herstellung über 14 Tage bei 40 °C und 90 % relativer Feuchte mit einem Biegeradius R von 100 mm, wobei die Dünnglasfolie 10 auf der Innenseite des Radius R liegt. Dies simuliert eine längere Zeit zwischen der Herstellung eines aufgewickelten Verbunds und der Verpackung der Rolle. Das weitere Vorgehen ist wie bei den anderen Mustern.

Weiterhin wird die Reversibilität der Beschichtung der Dünnglasfolie 10 subjektiv durch manuelle Ablöseversuche beurteilt. Dazu wird der Verbund mit seiner Glasseite mittels eines stark klebenden Klebebands (tesa 4972) auf eine Stahlplatte geklebt und die Beschichtung mittels mit dem gleichen Klebeband aufgeklebter Anfasser von einer Ecke ausgehend abgezogen.

Tabelle 2: Ergebnisse des Verfahrens

| Beispiel | Wassergehalt polymere Beschichtung [ppm] | Reversibilität + als Schicht ablösbar - nicht ablösbar | Biegeradius ohne Lagerung [mm] | Biegeradius nach Lagerung [mm] |
|---|---|---|---|---|
| V1 | 15 | - | 28 | 32 |
| V2 | 26 | - | 31 | 38 |
| V3 | 11 | + | 32 | 31 |
| V4 | 9 | - | 30 | 31 |
| V5 | 11 | - | 28 | 33 |
| V6 | 114 | - | 33 | 40 |
| V7 | 8 | + | 32 | 34 |
| V8 | 9 | - | 29 | 30 |
| V9 | 18 | - | 31 | 30 |
| C1 | 1320 | - | 28 | 45 |

Die Ergebnisse zeigen, dass mit dem erfindungsgemäßen Verfahren Dünnglasfolie 10 hervorragend geschützt werden kann. Im Schnitt zeigen die erfindungsgemäß beschichteten Dünnglasfolien 10 kaum eine Erhöhung des minimalen Biegeradius R, während das Vergleichsbeispiel eine signifikante Erhöhung aufweist.

Dabei ist insbesondere die Ausführung mit Verwendung der permeationshemmenden zusätzlichen Barriereschicht 30 (V9) geeignet, da diese das Eindiffundieren von Feuchte in den Verbund 31 erheblich vermindert und somit trotz längerer Lagerzeit und geringerem Gettermaterialgehalt einen geringeren minimalen Biegeradius R aufweist als das entsprechende Muster ohne die permeationshemmende zusätzliche Schicht 30 (V6).

Die Verwendung stark permeationshemmender Beschichtungsmaterialien 20 (B3 und B4) ergibt ebenfalls Vorteile gegenüber permeableren Beschichtungsmaterialien 20.

Der Wassergehalt der Beschichtungsmaterialien 20 nach der Lagerung wird ermittelt nach DIN 53715 (Karl-Fischer-Titration). Die Messung erfolgt an einem Karl-Fischer Coulometer 851 in Verbindung mit einem Ovensampler (Ofentemperatur 140 °C). Mit einer Einwaage von ca. 0,5 g des Verbunds wurde jeweils eine Dreifachbestimmung durchgeführt, wobei der Wassergehalt jeweils nur auf die Menge des Beschichtungsmaterials bezogen wird, da angenommen wird, dass das Glas selbst kein Wasser in relevanter Menge aufnimmt. Als Wassergehalt wird der arithmetische Mittelwert der Messungen angegeben.

Es zeigt sich, dass das Gettermaterial in dem Beschichtungsmaterial die Wassermenge, der das Glas ausgesetzt wird, erheblich reduziert und dass dies einen klaren Einfluss auf den minimalen Biegeradius ausübt.

Die Bestimmung des minimalen Biegeradius R erfolgt mit Hilfe des Two-Point-Bending-Tests. Die Testmethode basiert auf der veröffentlichten *Corning* Methode von S.T. Gulati und dem Patent WO 2011/084323 A1 (Gulati et al., ID Symposium Digest of Technical Papers Vol 42, Issue 1, pages 652 to 654, June 2011).

Um Kanteneffekte auszuschließen, wird ein stabilisierender, ca. 10 mm breiter Streifen des Klebebands tesa 50575 (80 $\mu$m dicke Aluminiumfolie mit Acrylathaftklebemasse) entlang beider Ränder der Dünnglasfolie quer zur Biegeachse verklebt, so dass er ca. 1 mm über den Glasrand hinaussteht. Diese Aluminiumstreifen kommen beim Biegetest auf der Außenseite des Biegeradius zu liegen und bewirken, dass die Glaskante unter Druckspannung gehalten wird, so dass die Gefahr von dort ausgehender Risse deutlich vermindert wird.

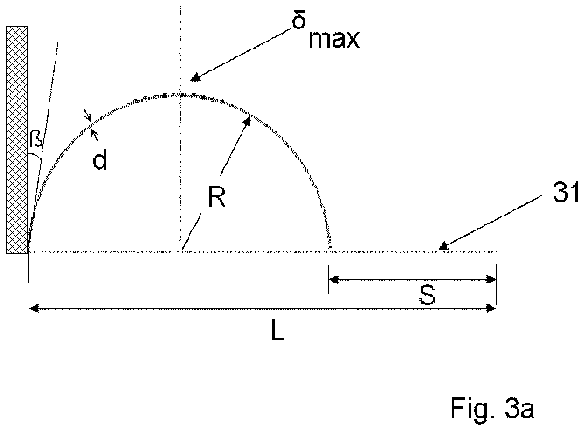

Die Flexibilität des beschichteten Glases ist durch den Two-Point-Bending-Test charakterisierbar. Dabei misst und berechnet man den minimalen Biegeradius R in Millimetern kurz vor dem oder genau im Bruchmoment. Das Laminat liegt mit der Beschichtungsseite nach oben und ist an einer Seite fixiert. Die andere Seite wird mit einer Geschwindigkeit von 10 mm/min in Richtung des fixierten Endes verschoben. Der dabei entstehende Biegeradius R wird gemessen oder aus der Dehnung berechnet. Der Testaufbau für den Two-Point-Bending-Test ist in Fig. 3a dargestellt. Eine gepunktete Linie repräsentiert die Position und die Länge L des beschichteten Dünnglases 31 vor der Biegung. Die durchgezogene Linie zeigt schematisch die Position des beschichteten Dünnglases 31 bei der minimalen Biegung im Moment des ersten auftretenden Risses quer zur Bewegungsrichtung.

L ist die Länge des beschichteten Dünnglases 31, s die Distanz, welche das eine Ende des beschichteten Dünnglases 31 während des Biegevorgangs bis zum Bruch zurückgelegt hat. Die Dicke des beschichteten Dünnglases ist mit d abgekürzt. $\beta$ ist der Kontaktwinkel, welcher für die Berechnung der Biegespannung $\delta$ notwendig ist. Mit sinkendem Kontaktwinkel $\beta$, also mit sich verringerndem Radius R, steigt die Spannung auf das Glas.

Der Versuch wird mittels einer Videokamera in der seitlichen Ansicht aufgezeichnet. Der Radius R wird im Moment des Bruchs mit Hilfe eines im Bild befindlichen Maßstabs abgemessen oder mit unten stehender Formel berechnet. Die Biegedehnung $\varepsilon$, welche zur Berechnung des Biegeradius R notwendig ist, wird mittels eines Dehnungsmessstreifens bestimmt.

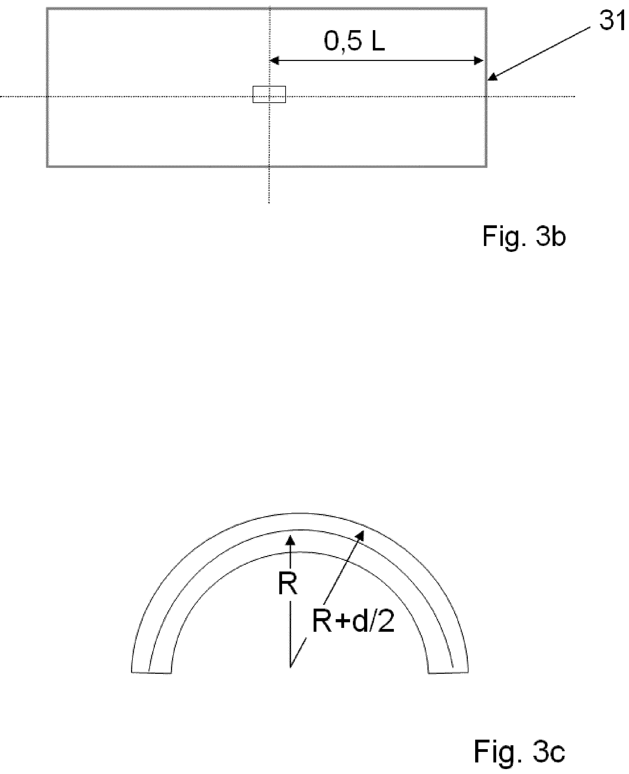

Fig. 3b zeigt die Anordnung des Dehnungsmessstreifens im Zentrum des Dünnglasverbundes 31.

Der Biegeradius R wird aus der gemessenen Biegedehnung $\varepsilon$ wie folgt berechnet:

$$\frac{R}{R+\frac{d}{2}} = \frac{L}{L+\Delta L}$$

$$\frac{R}{R + \frac{d}{2}} = \frac{1}{1 + \frac{\Delta L}{L}} = \frac{1}{1 + \varepsilon}$$

$$R + R\varepsilon = R + \frac{d}{2}$$

$$R = \frac{d}{2\varepsilon}$$

Mit der Biegedehnung $\varepsilon = {}^{\Delta L}/_{L}$, L: ursprüngliche Länge und Länge der mittleren Phase des Dünnglasverbundes 31 mit Radius R, und $\Delta$L entspricht der Längenänderung der äußeren Phase des Dünnglasverbundes 31 mit Radius $R + \frac{d}{2}$ in Fig. 3c.

Als minimaler Biegeradius R der Tabelle 2 wird der Medianwert von fünfzehn Messungen angegeben.

**Messmethoden**

Molekulargewicht:

Die Molekulargewichtsbestimmungen der zahlenmittleren Molekulargewichte $M_n$ und der gewichtsmittleren Molekulargewichte $M_w$ (oder der sonstigen Molekulargewichte) erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 $\mu$, $10^3$ Å, ID 8,0 mm x 50 mm verwendet. Zur Auftrennung wurden die Säulen PSS-SDV, 5 $\mu$, $10^3$ sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

**Bezugszeichenliste**

| | |
|---|---|
| 10 | Dünnglasfolie |
| 20 | polymeres Beschichtungsmaterial |
| 30 | zusätzliche Barriereschicht |
| 31 | Dünnglasverbund |

| | |
|---|---|
| d | Dicke des Dünnglasverbundes |
| l | Trocknungsmittel |
| s | Verschiebung des Dünnglasverbundes |

| | |
|---|---|
| L | Länge Dünnglasverbund |
| R | Radius / Biegeradius |

| | |
|---|---|
| $\beta$ | Kontaktwinkel |
| $\delta$ | Biegespannung |
| $\varepsilon$ | Biegedehnung |

**Patentansprüche**

1.  Verfahren zur Lagerung einer Dünnglasfolie (10), indem
    die Dünnglasfolie (10) mit zwei Seiten bereitgehalten wird,
    wenigstens eine Seite der Dünnglasfolie (10) mit einem fluiden Beschichtungsmaterial (20) umfassend mindestens ein Trocknungsmittel bevorzugt flächig, besonders bevorzugt vollflächig beschichtet wird,
    das Beschichtungsmaterial (20) auf der wenigstens einen Seite der Dünnglasfolie (10) zu einer festen polymeren Beschichtung abbindet,
    die beschichtete Dünnglasfolie (10) zur Lagerung aufgerollt wird,
    wobei das polymere Beschichtungsmaterial der festen polymeren Beschichtung, bezogen auf eine Schichtdicke von 50 $\mu$m, eine Wasserdampfpermeationsrate (WVTR) von weniger als 50 g/m$^2$ x Tag aufweist, gemessen bei 38 °C und 90 % relativer Luftfeuchtigkeit nach ASTM F-1249.

2.  Verfahren nach Anspruch 1,
    **dadurch gekennzeichnet, dass** das polymere Beschichtungsmaterial der festen polymeren Beschichtung, bezogen auf eine Schichtdicke von 50 $\mu$m, eine Wasserdampfpermeationsrate (WVTR) von weniger als 20 g/m$^2$ x Tag aufweist, gemessen bei 38 °C und 90 % relativer Luftfeuchtigkeit nach ASTM F-1249.

3.  Verfahren nach Anspruch 1 oder 2,
    **dadurch gekennzeichnet, dass** die beschichtete Dünnglasfolie (10) derart aufgerollt wird, dass die radial äußere Seite der aufgerollten Dünnglasfolie (10) mit der polymeren Beschichtung beschichtet ist.

4.  Verfahren nach Anspruch 1, 2 oder 3,
    **dadurch gekennzeichnet, dass** als Beschichtungsmaterial (20) ein in Lösung, Dispersion oder Schmelze vorliegendes Polymer verwendet wird.

5.  Verfahren nach einem der vorhergehenden Ansprüche,
    **dadurch gekennzeichnet, dass** Aufbaukomponenten von Polymeren auf die wenigstens eine Folienseite aufgebracht werden und den aufgebrachten Aufbaukomponenten Energie zugeführt wird und die Aufbaukomponenten zum Beschichtungsmaterial (20) reagieren.

6.  Verfahren nach einem der vorstehenden Ansprüche,

**dadurch gekennzeichnet, dass** das Beschichtungsmaterial (20) eine Viskosität von mehr als 1 mPas und weniger als $10^8$ Pas, vorzugsweise weniger als $10^5$ besonders bevorzugt weniger als 10 Pas aufweist.

7. Verfahren nach einem der vorstehenden Ansprüche,
**dadurch gekennzeichnet, dass** auf die der Dünnglasfolie (10) abgewandten Seite der polymeren Beschichtung eine permeationshemmende zusätzliche Barriereschicht (30) aufgebracht wird, wobei vorzugsweise die Wasserdampfpermeationsrate (WVTR) der polymeren Beschichtung mit zusätzlicher Barriereschicht (30) weniger als 1 g/(m$^{2*}$d) beträgt, gemessen bei 38 °C und 90 % relativer Luftfeuchtigkeit nach ASTM F-1249.

8. Verfahren nach einem der vorhergehenden Ansprüche,
**dadurch gekennzeichnet, dass** die eine Seite der Dünnglasfolie (10) mit einem Silan enthaltenden Beschichtungsmaterial (20) beschichtet wird und die polymere Beschichtung dauerhaft auf der Dünnglasfolie (10) verbleibt.

9. Verfahren nach einem der Ansprüche 1 bis 7,
**dadurch gekennzeichnet, dass** die abgebundene Schicht aus dem fluiden Beschichtungsmaterial (20) reversibel mit der Dünnglasfolie (10) verbunden ist.

10. Aufgerollter Dünnglasverbund (31) mit
einer Dünnglasfolie (10) mit zwei Seiten,
einer vollflächigen polymeren Beschichtung umfassend mindestens ein Trocknungsmittel, die auf wenigstens einer der Seiten abgebunden ist und die die wenigstens eine Seite der Dünnglasfolie (10) vollflächig unmittelbar berührt und die auf der radial äußeren Seite der Dünnglasfolie (10) aufgebracht ist,
wobei das polymere Beschichtungsmaterial der festen polymeren Beschichtung, bezogen auf eine Schichtdicke von 50 $\mu$m, eine Wasserdampfpermeationsrate (WVTR) von weniger als 50 g/m$^2$ x Tag aufweist, gemessen bei 38 °C und 90 % relativer Luftfeuchtigkeit nach ASTM F-1249.

11. Aufgerollter Dünnglasverbund (31) nach Anspruch 10,
**dadurch gekennzeichnet, dass** das polymere Beschichtungsmaterial der festen polymeren Beschichtung, bezogen auf eine Schichtdicke von 50 $\mu$m, eine Wasserdampfpermeationsrate (WVTR) von weniger als 20 g/m$^2$ x Tag aufweist, gemessen bei 38 °C und 90 % relativer Luftfeuchtigkeit nach ASTM F-1249.

12. Aufgerollter Dünnglasverbund (31) nach Anspruch 10 oder 11,
**dadurch gekennzeichnet, dass** auf eine der Dünnglasfolie (10) abgewandten Seite der polymeren Beschichtung eine zusätzliche permeationshemmende Barriereschicht (30) vollflächig aufgebracht ist, wobei vorzugsweise die Wasserdampfpermeationsrate (WVTR) der polymeren Beschichtung mit zusätzlicher Barriereschicht weniger als 1 g/(m$^{2*}$d) beträgt, gemessen bei 38 °C und 90 % relativer Luftfeuchtigkeit nach ASTM F-1249.

**Claims**

1. Method for storing a thin sheet glass film (10), wherein the thin sheet glass film (10) is held at two sides,
at least one side of the thin sheet glass film (10) is coated with a fluid coating material (20) comprising at least one drying agent preferably over its surface, and particularly preferably over its entire surface,
the coating material (20) on the at least one side of the thin sheet glass film (10) sets to form a solid polymeric coating, and
the coated thin sheet glass film (10) is rolled up for storage,
wherein the polymeric coating material of the solid polymeric coating, based on a layer thickness of 50 $\mu$m, has a water vapour permeation rate (WVTR) of less than 50 g/m$^2$ x day, measured at 38°C and 90% relative air humidity to ASTM F-1249.

2. Method according to Claim 1,
**characterized in that** the polymeric coating material of the solid polymeric coating, based on a layer thickness of 50 $\mu$m, has a water vapour permeation rate (WVTR) of less than 20 g/m$^2$ x day, measured at 38°C and 90% relative air humidity to ASTM F-1249.

3. Method according to Claim 1 or 2,
**characterized in that** the coated thin sheet glass film (10) is rolled up in such a way that the radial outer side of the rolled up thin sheet glass film (10) is coated with the polymeric coating.

**4.** Method according to Claim 1, 2 or 3,
**characterized in that** a solution, dispersion, or melt of the present polymer is used as a coating material (20).

**5.** Method according to one of the preceding claims,
**characterized in that** structural components of polymers are applied to the at least one film side, energy is transmitted to the applied structural components, and the structural components react to form the coating material (20).

**6.** Method according to one of the preceding claims,
**characterized in that** the coating material (20) has a viscosity of more than 1 mPa·s and less than $10^8$ Pa·s, preferably less than $10^5$, and particularly preferably less than 10 Pa·s.

**7.** Method according to one of the preceding claims,
**characterized in that** a permeating-inhibiting additional barrier layer (30) is applied to the side of the polymeric coating facing away from the thin sheet glass film (10), wherein the water vapour permeation rate (WVTR) of the polymeric coating with an additional barrier layer (30) is preferably less than 1 g/m$^2$ x day, measured at 38°C and 90% relative air humidity to ASTM F-1249.

**8.** Method according to one of the preceding claims,
**characterized in that** one side of the thin sheet glass film (10) is coated with a silane-containing coating material (20) and the polymeric coating remains permanently on the thin sheet glass film (10).

**9.** Method according to one of Claims 1 to 7,
**characterized in that** the set layer of the fluid coating material (20) is reversibly bonded to the thin sheet glass film (10).

**10.** Rolled up thin sheet glass composite (31) having
a thin sheet glass film (10) with two sides and
a polymeric coating over its entire surface comprising at least one drying agent, which sets on at least one of the sides and is in direct contact with at least one side of the thin sheet glass film (10) over its entire surface and is applied to the radial outer side of the thin sheet glass film (10),
wherein the polymeric coating material of the solid polymeric coating, based on a layer thickness of 50 μm, has a water vapour permeation rate (WVTR) of less than 50 g/m$^2$ x day, measured at 38°C and 90% relative air humidity to ASTM F-1249.

**11.** Rolled up thin sheet glass composite (31) according to Claim 10, **characterized in that** the polymeric coating material of the solid polymeric coating, based on a layer thickness of 50 μm, has a water vapour permeation rate (WVTR) of less than 20 g/m$^2$ x day, measured at 38°C and 90% relative air humidity to ASTM F-1249.

**12.** Rolled up thin sheet glass composite (31) according to Claim 10 or 11, **characterized in that** an additional permeation-inhibiting barrier layer (30) is applied over the entire surface of a side of the polymeric coating facing away from the thin sheet glass film (10), wherein the water vapour permeation rate (WVTR) of the polymeric coating with an additional barrier layer (30) is preferably less than 1 g/m$^2$ x day, measured at 38°C and 90% relative air humidity to ASTM F-1249.

**Revendications**

**1.** Procédé de stockage d'une feuille de verre mince (10), selon lequel la feuille de verre mince (10) comprenant deux côtés est mise à disposition,
au moins un côté de la feuille de verre mince (10) est revêtu avec un matériau de revêtement fluide (20) comprenant au moins un agent siccatif, de préférence sur la surface, de manière particulièrement préférée sur l'ensemble de la surface,
le matériau de revêtement (20) durcit en un revêtement polymère solide sur ledit au moins un côté de la feuille de verre mince (10),
la feuille de verre mince revêtue (10) est enroulée pour le stockage,
le matériau de revêtement polymère du revêtement polymère solide présentant, par rapport à une épaisseur de couche de 50 μm, un taux de perméation de la vapeur d'eau (WVTR) de moins de 50 g/m$^2$ x jour, mesuré à 38 °C et 90 % d'humidité relative de l'air selon ASTM F-1249.

**2.** Procédé selon la revendication 1, **caractérisé en ce que** le matériau de revêtement polymère du revêtement polymère solide présente, par rapport à une épaisseur de couche de 50 $\mu$m, un taux de perméation de la vapeur d'eau (WVTR) de moins de 20 g/m$^2$ x jour, mesuré à 38 °C et 90 % d'humidité relative de l'air selon ASTM F-1249.

**3.** Procédé selon la revendication 1 ou 2, **caractérisé en ce que** la feuille de verre mince revêtue (10) est enroulée de telle sorte que le côté radialement extérieur de la feuille de verre mince enroulée (10) soit revêtu avec le revêtement polymère.

**4.** Procédé selon la revendication 1, 2 ou 3, **caractérisé en ce qu'**un polymère qui se présente en solution, dispersion ou masse fondue est utilisé en tant que matériau de revêtement (20).

**5.** Procédé selon l'une quelconque des revendications précédentes, **caractérisé en ce que** des composants constitutifs de polymères sont appliqués sur ledit au moins un côté de la feuille, et de l'énergie est apportée aux composants constitutifs appliqués, et les composants constitutifs réagissent pour former le matériau de revêtement (20).

**6.** Procédé selon l'une quelconque des revendications précédentes, **caractérisé en ce que** le matériau de revêtement (20) présente une viscosité de plus de 1 mPas et moins de 10$^8$ Pas, de préférence de moins de 10$^5$, de manière particulièrement préférée de moins de 10 Pas.

**7.** Procédé selon l'une quelconque des revendications précédentes, **caractérisé en ce qu'**une couche de barrière supplémentaire (30) inhibant la perméation est appliquée sur le côté du revêtement polymère opposé à la feuille de verre mince (10), le taux de perméation de la vapeur d'eau (WVTR) du revêtement polymère muni d'une couche de barrière supplémentaire (30) étant de préférence de moins de 1 g/(m$^{2*}$j), mesuré à 38 °C et 90 % d'humidité relative de l'air selon ASTM F-1249.

**8.** Procédé selon l'une quelconque des revendications précédentes, **caractérisé en ce qu'**un côté de la feuille de verre mince (10) est revêtu avec un matériau de revêtement contenant un silane (20), et le revêtement polymère reste durablement sur la feuille de verre mince (10).

**9.** Procédé selon l'une quelconque des revendications 1 à 7, **caractérisé en ce que** la couche durcie du matériau de revêtement fluide (20) est reliée de manière réversible avec la feuille de verre mince (10).

**10.** Composite de verre mince enroulé (31) comprenant
une feuille de verre mince (10) comprenant deux côtés,
un revêtement polymère sur l'ensemble de la surface, comprenant au moins un agent siccatif, qui est durci sur au moins un des côtés et qui est en contact direct sur l'ensemble de la surface avec ledit au moins un côté de la feuille de verre mince (10), et qui est appliqué sur le côté radialement extérieur de la feuille de verre mince (10),
le matériau de revêtement polymère du revêtement polymère solide présentant, par rapport à une épaisseur de couche de 50 $\mu$m, un taux de perméation de la vapeur d'eau (WVTR) de moins de 50 g/m$^2$ x jour, mesuré à 38 °C et 90 % d'humidité relative de l'air selon ASTM F-1249.

**11.** Composite de verre mince enroulé (31) selon la revendication 10, **caractérisé en ce que** le matériau de revêtement polymère du revêtement polymère solide présente, par rapport à une épaisseur de couche de 50 $\mu$m, un taux de perméation de la vapeur d'eau (WVTR) de moins de 20 g/m$^2$ x jour, mesuré à 38 °C et 90 % d'humidité relative de l'air selon ASTM F-1249.

**12.** Composite de verre mince enroulé (31) selon la revendication 10 ou 11, **caractérisé en ce qu'**une couche de barrière supplémentaire (30) inhibant la perméation est appliquée sur l'ensemble de la surface sur le côté du revêtement polymère opposé à la feuille de verre mince (10), le taux de perméation de la vapeur d'eau (WVTR) du revêtement polymère muni d'une couche de barrière supplémentaire étant de moins de 1 g/(m$^{2*}$j), mesuré à 38 °C et 90 % d'humidité relative de l'air selon ASTM F-1249.

Fig. 1

Fig. 2

Fig. 3a

0,5 L

31

Fig. 3b

R

R+d/2

Fig. 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011084323 A1
- US 6815070 B1
- WO 2005110741 A1
- DE 1955853 A1
- EP 2363383 A1
- JP 2008273211 B
- DE 10200131 A1
- EP 2204355 A1
- WO 2008093153 A1
- US 20130196163 A1
- WO 0041978 A1
- EP 1832558 A1
- DE 102008062130 A1

- DE 102008047964 A1
- DE 102008037866 A1
- DE 102008060113 A1
- DE 102010043866 A1
- DE 102010043871 A1
- DE 102009036970 A1
- DE 102008061840 A1
- US 6159608 B
- WO 2008036222 A
- JP 2000003782 A
- US 6501014 B1
- EP 0924761 A1


**In der Beschreibung aufgeführte Nicht-Patentliteratur**

- **MATTEO CICCOTTI.** Stress-corrosion mechanism in silicate glasses. *Journal of Physics D: applied Physics,* 2009, vol. 42
- **BODO MÜLLER.** Additive kompakt. Vincentz Network GmbH & Co KG, 2009
- **H. SCHMIDT.** Modification of Glass Surfaces by Multifunctional Chemical Coatings. *Fundamentals of Glass Science & Technology - 3rd ESG Conf.,* 1995
- J. Oliver: Influences on Barrier Performance of UV/EB Cured Polymers. *RadTech Conference,* 2010

- **H. FURUCHI.** *Glass Technology,* 1994, vol. 35 (6), 272-275
- **M. MIZUHASHI.** *Reports Res. Lab. Asahi Glass Co. ltd.,* 1986, vol. 36 (1), 1-14
- **H.K. SCHMIDT.** *3'd Conference European Society of Glass Science and Technology (ESG),* 1995
- **GULATI et al.** *ID Symposium Digest of Technical Papers,* Juni 2011, vol. 42 (1), 652-654